# EUROPEAN PATENT SPECIFICATION

(11) **EP 2 141 376 B1**
(45) Date of publication and mention of the grant of the patent: **02.02.2011**
(21) Application number: 09008120.9
(22) Date of filing: 20.06.2009
(51) Int. Cl.: F16D 13/64

(54) **Clutch driven plates**
Durch eine Kupplung angetriebene Bleche
Disques d'embrayage

(30) Priority: 30.06.2008 GB 0811864
(43) Date of publication of application: 06.01.2010
(73) Proprietor: Automotive Products S.p.A., Spontini, Ancona (IT)
(72) Inventor: Ribichini, Andrea, 60030 Ancona (IT); Gallagher, Paul Andrew, 60030 Ancona (IT)
(74) Representative: Morrall, Roger

(56) References cited:
- DE-A1- 3 142 941
- DE-A1- 3 143 641
- DE-A1- 19 930 604
- ES-A1- 467 241
- US-A- 4 303 149

## Description

This invention relates to clutch driven plates (hereinafter referred to as of the kind described) which include a central hub for connection to an associated transmission input shaft rotatable about a first axis, an outer annular friction member supported from the hub for clamping against an associated flywheel rotatable about a second axis, the friction member being capable of limited rotation relative to the hub against the action of a damping means to damp torsional vibrations which occur during use of the driven plate.

Clutch driven plates of the kind described are well known but suffer from operational difficulties resulting from misalignment between the first and second axes due to the build up of manufacturing tolerances in clutch and transmission housings and components which support the transmission input shaft for rotation about the first axis and the tolerances in the crankshaft and crankshaft supports which support the flywheel for rotation about the second axis. As will be appreciated, when the clutch is engaged and the driven plate is clamped against the flywheel the driven plate rotates with the flywheel so the first and second axes of rotation must coincide any misalignment must be accommodated by the components of the driven plate. See for instance US-4 303 149and DE 3142941.

It is an object of the present invention to provide a clutch driven plate which at least mitigates the above misalignment problem.

Thus according to the present invention there is provided a clutch driven plate which includes a central hub for connection to an associated transmission input shaft rotatable about a first axis, an outer annular friction member supported from the hub for clamping against an associated flywheel rotatable about a second axis, the friction member being rotatable relative to the hub against the action of a damping means to damp torsional vibrations which occur during use of the driven plate, the hub also being radially and axially displaceable relative to the outer annular friction member to accommodate angular and translatory misalignment of the first and second axes, **characterised in that** the radial displacement of the hub relative to the annular friction member is controlled by radial deflection of first portions of a plastics washer which surrounds the hub and is located radially between the hub and the friction member.

The first parts of the plastics washer may comprise flexible radially inwardly projecting bow-shaped portions which are circumferentially spaced around the washer and which contact a generally radially outwardly facing surface on the hub, the bow-shaped portions being loaded radially by the hub when the hub is in a radially central position in order to bias the hub radially towards said radially central position.

The plastics washer may also include individual radial stops at circumferentially spaced locations on the washer (or a circumferentially continuous annular stop member placed on a different height from the bow-shaped portions), the individual radial stops or continuous annular stop member contacting the hub after a given amount of radial displacement of the hub relative to the annular friction member to limit said radial displacement.

The axial displacement of the hub relative to the annular friction member is also controlled by axial deflection of second portions of the plastics washer.

Angular displacement of the hub axis relative to the annular friction member axis is controlled by a combination of both radial deflection of bow-shaped portion and axial deflection of the second portion of the plastics washer.

The second portions of the plastics washer may comprise circumferentially spaced flexible tabs which project axially from the washer into contact with a generally radial surface on the hub, the tabs being deflected relative to the remainder of the plastics washer when the hub moves axially relative to the friction member to resist said axial movement.

In an alternative arrangement the axial displacement of the hub relative to the annular friction member may be controlled by a wave washer or Belleville spring which acts between the plastics washer and a generally radially extending surface on the hub.

Part of the damping means may comprises a first series of circumferentially spaced compression springs partially housed in recesses in the plastics washer which form part of an idle rattle damper of the driven plate.

One embodiment of the present invention will now be described, by way of example only, with reference to the accompanying drawings in which:-
Figure 1 is an axial section of a clutch driven plate embodying the invention;

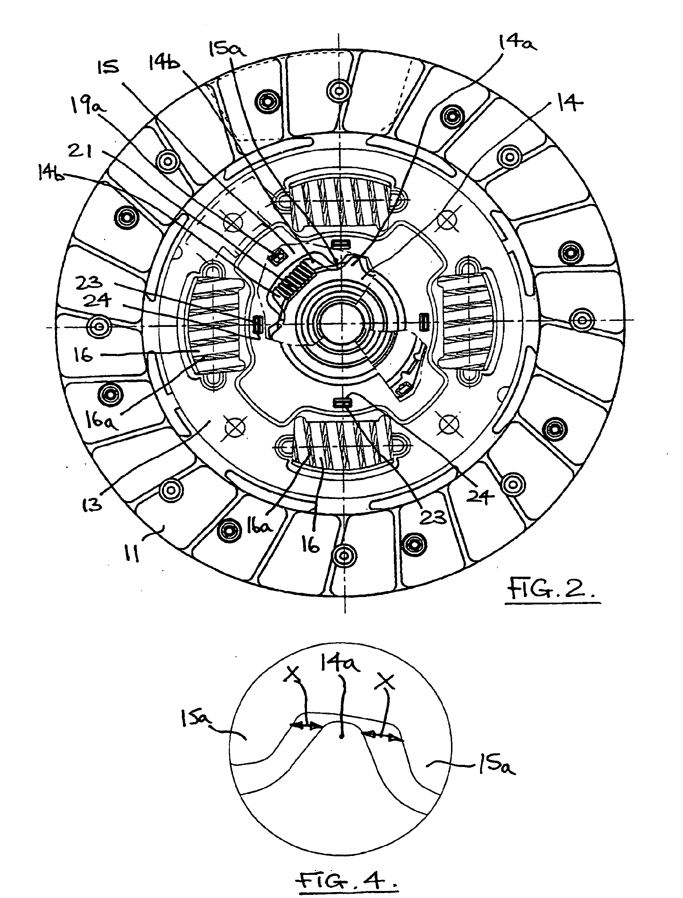

Figure 2 is a partly cut away side view of the driven plate of Figure 1 in the direction of arrow A;
Figures 3 is an axial section on an enlarged scale of part of the hub of the driven plate of Figure 1;
Figure 4 shows a fragmentary views of the circumferential play built into the driven plate;
Figure 5 shows a side view of a hub support washer used in the driven plate of Figure 1;
Figure 6 shows a section on the line A-A of Figure 5;
Figure 7 and 8 show details of the washer of Figure 5; and
Figure 9 shows an axial section of part of an alternative hub arrangement, and
Figure 10 shows an axial section of an alternative driven plate embodying the invention with a cassette type idle damper.

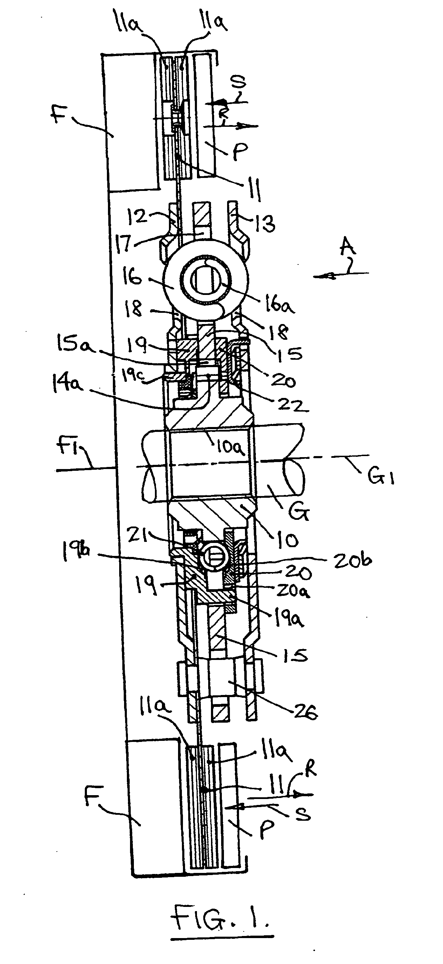

Referring to the drawings, the driven plate comprises a central hub 10 on which an outer annular friction member 11 with clutch linings 11a is mounted via out side plates 12 and 13 which are riveted together at 26. Linings 11a are designed to be clamped between a flywheel shown diagrammatically at F which is rotatable about an engine crankshaft F1 and a clutch pressure plate P carried by the flywheel by a spring means S. The pressure plate P is pulled away from the flywheel F to release the clutch by a release mechanism R also indicated diagrammatically in figure 1.

Hub 10 is splined at 10a for driving engagement with a gearbox input shaft G having an axis of rotation G1 and has a hub flange 14 with teeth 14a which engage with circumferential clearance 'X' teeth 15a formed on a support flange 15. Teeth 14a can also move radially relative to teeth 15a as will be referred to below. Circumferentially acting compression springs 16 and 16a engage cut outs 17 in flange 15 and windows 18 in side plates 12 and 13 to damp the relative rotation between outer side plates 12 and 13 and flange 15 and thus constitute part of a main drive damper of the driven plate.

Located either side of support flange 15 are plastics washers 19 and 20 which are connected together and to flange 15 by projections 19a on washer 19 which engage cut outs 15b in flange 15 and openings 20a in washer 20. Washers 19 and 20 also include recesses 19b and 20b respectively which accommodate idle damper springs 21. Springs 21 are also contacted by formations 14b on the hub flange 14 to compress the springs 21 and thus resist relative rotation of the flange 15 and hence the washers 19 and 20 relative to hub 10 to provide part of the idle damper of the driven plate. Outer side plate 12 is supported on axially extending tubular portion 19c of washer 19.

As will be appreciated, the driven plate basically operates in two angular ranges of rotation. A first or idle angular range determined by the circumferential clearance X during which friction member 11, outer side plates 12 and 13, and flange 15 rotation relative to hub 10 and a second or main drive range after teeth 14a and 15a are in contact with each other and during which friction member 11 (and hence outer side plates 12 and 13) rotate relative to support flange 15 (and hence hub 10).

During the first or idle angular range relative rotation of friction member 11 relative to hub 10 is resisted by idle springs 21 and during the second or main drive range relative rotation between friction member 11 and hub 10 is resisted by main damping springs 16 and 16a.

The idle damper also includes friction damping provided by a friction member 22 which has tangs 23 which extend through apertures 24 in side plate 13. Friction member 22 is biased into contact with plastics washer 20 by wavy washer 25 so that friction damping of the rotation between hub 10 and side plates 12 and 13 is provided.

In accordance with the present invention plastics washer 19 allows both radial and axial movement of hub 10 relative to the side plates 12 and 13 (hence friction member 11). This movement accommodates angular misalignment of shaft axes F1 and G1 and also translatory misalignment of these shafts in which the shafts are generally parallel to each other but not aligned.

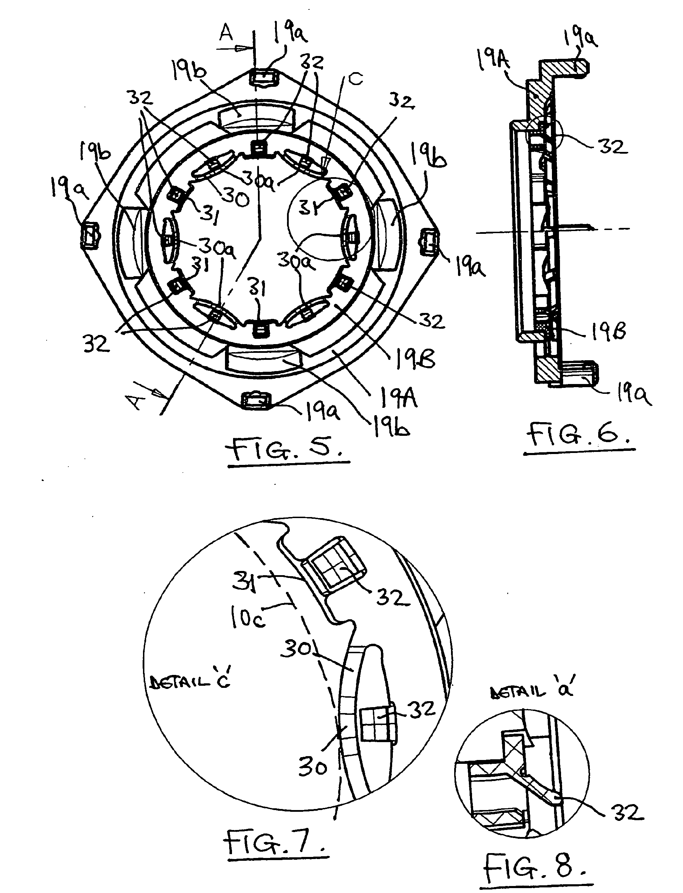

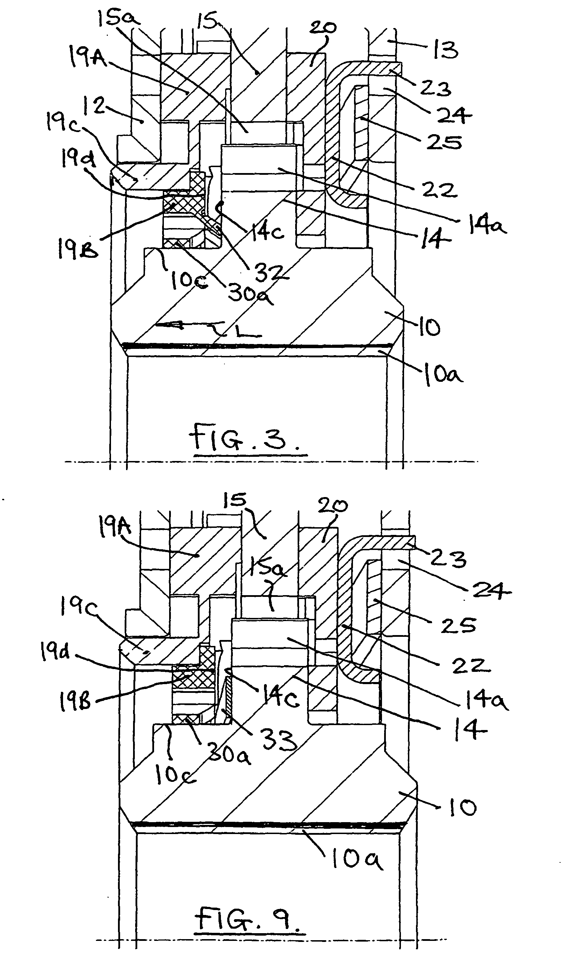

Plastics washer 19 is in two concentric parts 19A and 19B which are bonded together by adhesive or welding etc. Outer part 19A includes projections 19a and spring recesses 19b. Inner part 19B includes flexible bow-shaped bridge portions 30 which are circumferentially spaced around the inner periphery of washer 19. The central regions 30a of portions 30 contact the radially outwardly facing shoulder 10c on hub 10 as indicated in Figures 3 and 7. The bridge portions 30 bias the hub 10 towards a central position and are deflected as the hub 10 moves radially relative to side plates 12 and 13. The radial displacement of hub 10 relative to side plates 12, 13 and hence friction member 11 is limited by stop members 31 which are located circumferentially between bridge portions 30.

Axial displacement of hub 10 relative to side plates 12 and 13 is controlled by flexible axially projecting tabs 32 which engage the side 14c of hub flange 14. As hub 10 moves axial relative to side places 12 and 13, as indicated by arrow L in Figure 3, the tabs 32 are bent and the ultimate stop on the movement of hub 10 to the left relative to side plate 12 is reached when side 14c of flange 14 contacts surface 19d of washer 19. Tabs 32 are relieved at 32a to reduce stress concentration during bending and tend to displace hub 10 back to the position shown in Figure 3.

As will be appreciated, when the clutch is engaged driven plate 10 is clamped against the flywheel F by pressure plate P and spring S and any misalignment between the axes of rotation F1 and G1 is accommodated by the combination of radial and axial movement of the hub 10 relative to the side plates 12 and 13 using the washer 19 as described above.

Figure 9 shows an alternative hub arrangement in which the tabs 32 of washer 19 are replaced by a wavy washer or belleville washer 33 which acts between plastics washer 19 and the side 14c of hub flange 14 to control the movement of hub 10 relative to side plate 12.

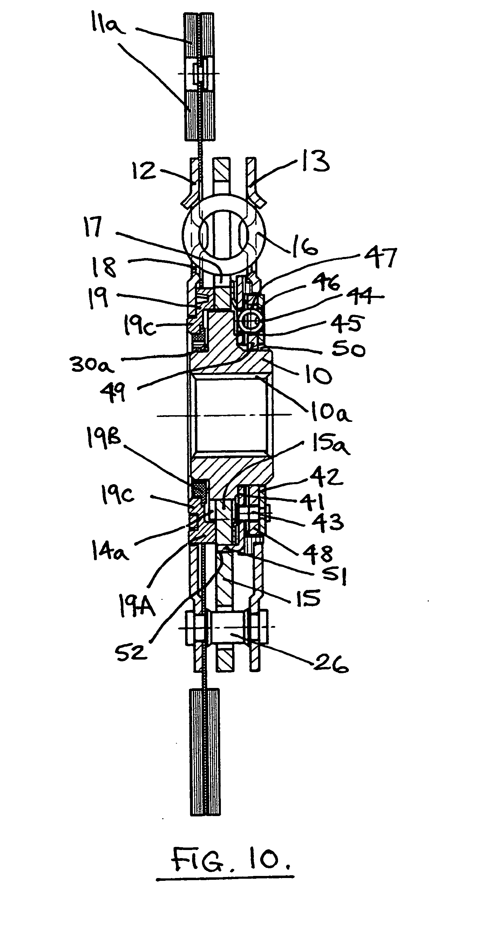

Figure 10 shows an alternative driven plate arrangement in which the idle rattle damper is provided as a cassette type component 40 which has outer plates 41 and 42 which are riveted together at 43 and which house springs 44 located in windows 45 and 46 in plates 41 and 42 and in windows 47 in a central plate 48. Plate 48 is connected with hub 10 by teeth 49 which engage teeth 50 on hub 10 and outer-plates 41 and 42 are connected with flange 15 via tangs 51 on plate 41 which engage openings 52 in flange 15.

In this driven plate arrangement the plastic washer 20 of Figure 1 is omitted and only plastic washer 19 is used which again is in two concentric parts 19A and 19B and which includes the bridge portions 30 and the projecting tabs 32 to control radial and axial movement of the hub 10 relative to the side plates 12 and 13.

As will be appreciated, in all the constructions described above, the preload of bridging portions 30 and tabs 32 on to hub 10 can be arranged to generate at least part of the friction damping of the circumferential movement of hub10 relative side plates 12 and 13.

## Claims

1. A clutch driven plate which includes a central hub (10) for connection to an associated transmission input shaft (G) rotatable about a first axis (G1), an outer annular friction member (11) supported from the hub for clamping against an associated flywheel (F) rotatable about a second axis (F1), the friction member being capable of limited rotation relative to the hub against the action of a damping means (16,16a) to damp torsional vibrations which occur during use of the driven plate, the hub also being radially and axially displaceable relative to the outer annular friction member to accommodate angular and translatory misalignment of the first (G1) and second (F1) axes, **characterised in that** the radial displacement of the hub (10) relative to the annular friction member (11) is controlled by radial deflection of first portions (30) of a plastics washer (19) which surrounds the hub (10) and is located radially between the hub (10) and the friction member (11).

2. A driven plate according to claim 1 **characterised in that** the first portions of the plastics washer (19) comprise flexible radially inwardly projecting bow-shaped portions (30) which are circumferentially spaced around the washer and which contact a generally radially outwardly facing surface (10c) on the hub (10), the bow-shaped portions being loaded radially by the hub when the hub is in a radially central position to bias the hub radially towards said radially central position.

3. A driven plate according to claim 2 **characterised in that** the plastics washer (19) also includes radial stop means (31) which contacts the hub (10) after a given amount of radial displacement of the hub relative to the annular friction member (11) to limit said radial displacement and thus avoid excessive deflection of said first portions (30) of the plastic washer.

4. A driven plate according to any one of claims 1 to 3 **characterised in that** the axial displacement of the hub (10) relative to the annular friction member (11) is also controlled by axial deflection of second portions (32) of the plastics washer (19).

5. A driven plate according to claim 4 **characterised in that** the second portions of the plastics washer (19) comprise circumferentially spaced flexible tabs (32) which project axially from the washer into contact with a generally radial surface (14c) on the hub, the tabs (32) being deflected relative to the remainder of the plastics washer (19) when the hub moves axially relative to the friction member to resist said axial movement.

6. A driven plate according to any one of claims 1 to 3 **characterised in that** the axial displacement of the hub (10) relative to the annular friction member (11) is controlled by a wave washer or Belleville spring (33) which acts between the plastics washer (19) and a generally radially extending surface (14c) on the hub.

7. A driven plate according to any one of claims 1 to 6 **characterised in that** part of the damping means comprises a first series of circumferentially spaced compression springs (21) partially housed in recesses in the plastics washer (19) which form part of an idle damper of the driven plate.

8. A driven plate according to any one of claims 1 to 6 **characterised in that** part of the damping means comprises a first series of circumferentially spaced compression springs (44) housed into windows (45,46) in metal washers (41,42) which form part of a cassette idle damper (40) of the driven plate.

9. A driven plate according to any one of claims 1 to 8 **characterised in that** friction damping of the circumferential movement of the friction member (11) relative to the central hub (10) is provided by preloading the first and/or second portions (30,32) of the plastics washer (19) into frictional contact with adjacent parts of the driven plate.

## Patentansprüche

1. Kupplungsscheibe mit einer zentralen Nabe (10) zum Anschluss an eine zugehörige Getriebeeingangswelle (G), die um eine erste Achse (G1) drehbar ist, einem äußeren ringförmigen Reibungsteil (11), das von der Nabe getragen wird, um an ein zugehöriges Schwungrad (F), das um eine zweite Achse (F1) drehbar ist, geklemmt zu werden, wobei das Reibungsteil eine begrenzte Drehung relativ zu der Nabe gegen die Wirkung eines Dämpfungsmittels (16, 16a) zum Dämpfen von Drehschwingungen, die während des Gebrauchs der Kupplungsscheibe auftreten, ausführen kann, wobei die Nabe auch radial und axial relativ zu dem äußeren ringförmigen Reibungsteil versetzbar ist, um eine winklige und translatorische Fehlausrichtung der ersten (G1) und zweiten (F1) Achse aufzunehmen, **dadurch gekennzeichnet, dass** das radiale Versetzen der Nabe (10) relativ zu dem ringförmigen Reibungsteil (11) durch eine radiale Ablenkung von ersten Teilen (30) einer Kunststoffbeilagscheibe (19) gesteuert wird, die die Nabe (10) umgibt und radial zwischen der Nabe (10) und dem Reibungsteil (11) angeordnet ist.

2. Kupplungsscheibe nach Anspruch 1, **dadurch gekennzeichnet, dass** die ersten Teile der Kunststoffbeilagscheibe (19) flexible radial nach innen ragende bogenförmige Teile (30) aufweisen, die in Umfangsrichtung voneinander beabstandet um die Beilagscheibe herum angeordnet sind und die eine im Großen und Ganzen radial nach außen weisende Oberfläche (10c) an der Nabe (10) berühren, wobei die bogenförmigen Teile radial von der Nabe belastet werden, wenn die Nabe in einer radial zentralen Lage ist, um die Nabe radial in Richtung auf die radial zentrale Lage vorzuspannen.

3. Kupplungsscheibe nach Anspruch 2, **dadurch gekennzeichnet, dass** die Kunststoffbeilagscheibe (19) auch ein radiales Anschlagmittel (31) beinhaltet, das die Nabe (10) nach einem bestimmten Betrag radialer Versetzung der Nabe relativ zu dem ringförmigen Reibungsteil (11) berührt, um die radiale Versetzung zu begrenzen und infolgedessen eine übermäßige Ablenkung der ersten Teile (30) der Kunststoffbeilagscheibe zu vermeiden.

4. Kupplungsscheibe nach irgendeinem der Ansprüche 1 bis 3, **dadurch gekennzeichnet, dass** die axiale Versetzung der Nabe (10) relativ zu dem ringförmigen Reibungsteil (11) auch durch eine axiale Versetzung von zweiten Teilen (32) der Kunststoffbeilagscheibe (19) gesteuert wird.

5. Kupplungsscheibe nach Anspruch 4, **dadurch gekennzeichnet, dass** die zweiten Teile der Kunststoffbeilagscheibe (19) in Umfangsrichtung voneinander beabstandete flexible Zungen (32) aufweisen, die sich axial von der Beilagscheibe weg in Kontakt mit einer im Großen und Ganzen radialen Oberfläche (14c) an der Nabe erstrecken, wobei die Zungen (32) relativ zum Rest der Kunststoffbeilagscheibe (19) abgelenkt werden, wenn sich die Nabe axial relativ zu dem Reibungsteil bewegt, um der Axialbewegung zu widerstehen.

6. Kupplungsscheibe nach irgendeinem der Ansprüche 1 bis 3, **dadurch gekennzeichnet, dass** die axiale Versetzung der Nabe (10) relativ zu dem ringförmigen Reibungsteil (11) von einer Wellenscheibe oder einer Tellerfeder (33) gesteuert wird, die zwischen der Kunststoffbeilagscheibe (19) und einer im Großen und Ganzen radial sich erstreckenden Oberfläche (14c) an der Nabe wirkt.

7. Kupplungsscheibe nach irgendeinem der Ansprüche 1 bis 6, **dadurch gekennzeichnet, dass** ein Teil des Dämpfungsmittels
eine erste Reihe von in Umfangsrichtung voneinander beabstandeten Druckfedern (21) aufweist, die teilweise in Aussparungen in der Kunststoffbeilagscheibe (19) untergebracht sind und einen Teil eines Leerlaufdämpfers der Kupplungsscheibe bilden.

8. Kupplungsscheibe nach irgendeinem der Ansprüche 1 bis 6, **dadurch gekennzeichnet, dass** ein Teil des Dämpfungsmittels eine erste Reihe von in Umfangsrichtung voneinander beabstandeten Druckfedern (44) aufweist, die in Fenstern (45, 46) in Metallbeilagscheiben (41, 42) untergebracht sind und einen Teil eines Kassettenleerlaufdämpfers (40) der Kupplungsscheibe bilden.

9. Kupplungsscheibe nach irgendeinem der Ansprüche 1 bis 8, **dadurch gekennzeichnet, dass** eine Reibungsdämpfung der Umfangsbewegung des Reibungsteiles (11) relativ zu der zentralen Nabe (10) durch Vorspannen der ersten und/oder zweiten Teile (30, 32) der Kunststoffbeilagscheibe (19) in Reibungskontakt mit angrenzenden Teilen der Kupplungsscheibe bereitgestellt wird.

## Revendications

1. Disque d'embrayage comprenant un moyeu central (10) le reliant à un arbre primaire de boîte de vitesses associé (G) monté tournant autour d'un premier axe (G1), un élément de friction annulaire externe (11) soutenu par le moyeu et destiné à être serré contre un volant moteur associé (F) monté tournant autour d'un second axe (F1), l'élément de friction étant capable d'une rotation limitée par rapport au moyeu et contrant l'action de moyens amortisseurs (16, 16a) destinés à amortir les vibrations de torsion qui surviennent en cours d'utilisation du disque d'embrayage, le moyeu pouvant aussi se déplacer radialement et axialement par rapport à l'élément de friction annulaire externe afin de s'adapter au défaut d'alignement angulaire et de translation des premier (G1) et second (F1) axes, **caractérisé en ce que** le déplacement radial du moyeu (10) par rapport à l'élément de friction annulaire (11) est contrôlé par la flexion radiale des premières parties (30) d'une rondelle en plastique (19) qui entoure le moyeu (10) et se trouve en position radiale entre le moyeu (10) et l'élément de friction (11).

2. Disque d'embrayage selon la revendication 1, **caractérisé en ce que** les premières parties de la rondelle en plastique (19) comprennent des parties arquées flexibles en projection radiale vers l'intérieur (30), qui sont circulairement espacées autour de la rondelle et touchent une surface du moyeu (10) généralement dirigée radialement vers l'extérieur (10c), les parties arquées étant chargées radialement par le moyeu, lorsque celui-ci se trouve en position radialement centrée, afin d'incliner le moyeu radialement vers ladite position radialement centrée.

3. Disque d'embrayage selon la revendication 2, **caractérisé en ce que** la rondelle en plastique (19) comprend également un moyen de butée radiale (31) qui vient toucher le moyeu (10) au bout d'un certain déplacement radial du moyeu par rapport à l'élément de friction annulaire (11), afin de limiter ledit déplacement radial et d'éviter ainsi une flexion excessive desdites premières parties (30) de la rondelle en plastique.

4. Disque d'embrayage selon l'une quelconque des revendications 1 à 3, **caractérisé en ce que** le déplacement axial du moyeu (10) par rapport à l'élément de friction annulaire (11) est aussi contrôlé par la flexion axiale des secondes parties (32) de la rondelle en plastique (19).

5. Disque d'embrayage selon la revendication 4, **caractérisé en ce que** les secondes parties de la rondelle en plastique (19) comprennent des languettes flexibles circulairement espacées (32), qui se projettent axialement depuis la rondelle en contact avec une surface généralement radiale (14c) du moyeu, les languettes (32) étant fléchies par rapport au reste de la rondelle en plastique (19) lorsque le moyeu se déplace axialement par rapport à l'élément de friction pour résister audit déplacement axial.

6. Disque d'embrayage selon l'une quelconque des revendications 1 à 3, **caractérisé en ce que** le déplacement axial du moyeu (10) par rapport à l'élément de friction annulaire (11) est contrôlé par une rondelle ondulée ou un ressort Belleville (33) qui travaille entre la rondelle en plastique (19) et une surface en extension généralement radiale (14c) du moyeu.

7. Disque d'embrayage selon l'une quelconque des revendications 1 à 6, **caractérisé en ce qu'**une partie des moyens amortisseurs comprend une première série de ressorts de compressions circulairement espacés (21) partiellement logés dans des cavités de la rondelle en plastique (19) qui font partie d'un amortisseur de ralenti du disque d'embrayage.

8. Disque d'embrayage selon l'une quelconque des revendications 1 à 6, **caractérisé en ce qu'**une partie des moyens amortisseurs comprend une première série de ressorts de compressions circulairement espacés (44), logés dans des fenêtres (45, 46) ménagées dans des rondelles en métal (41, 42) qui font partie d'un amortisseur de ralenti à cassette (40) du disque d'embrayage.

9. Disque d'embrayage selon l'une quelconque des revendications 1 à 8, **caractérisé en ce que** l'amortissement de friction du mouvement circulaire de l'élément de friction (11) par rapport au moyeu central (10) est assuré en préchargeant la première et/ou la seconde parties (30, 32) de la rondelle en plastique (19) en contact de friction avec les parties adjacentes du disque d'embrayage.
